# EUROPÄISCHE PATENTSCHRIFT

(11) **EP 3 875 196 B1**
(45) Veröffentlichungstag und Bekanntmachung des Hinweises auf die Patenterteilung: **07.05.2025**
(21) Anmeldenummer: 20161083.9
(22) Anmeldetag: 05.03.2020
(51) Int. Cl.: B23C 5/00, B23C 5/10, B23C 5/28, B33Y 80/00, B22F 3/105, B23P 15/34

(54) **FRÄSWERKZEUG UND VERFAHREN ZUM HERSTELLEN EINES SCHNEIDENTEILS EINES FRÄSWERKZEUGS**
MILLING TOOL AND METHOD FOR MANUFACTURING A CUTTING PART OF A MILLING TOOL
OUTIL DE FRAISAGE ET PROCÉDÉ DE FABRICATION D'UNE PIÈCE DE COUPE D'UN OUTIL DE FRAISAGE

(43) Veröffentlichungstag der Anmeldung: 08.09.2021
(73) Patentinhaber: CERATIZIT Besigheim GmbH, 74354 Besigheim (DE)
(72) Erfinder: Schmid, Frank, 74354 Besigheim (DE); Edelmann, Karl-Heinz, 74354 Besigheim (DE)
(74) Vertreter: Ciesla, Dirk

(56) Entgegenhaltungen:
- EP-A1- 1 864 748
- WO-A1-2018/002165
- CN-A- 109 352 055
- US-A1- 2005 084 341
- US-A1- 2006 280 568
- US-B2- 7 134 811

## Beschreibung

Die vorliegende Erfindung betrifft ein Fräswerkzeug und ein Verfahren zum Herstellen eines Schneidenteils eines Fräswerkzeugs.

Bei der zerspanenden Bearbeitung von Werkstoffen durch Fräsen kommen häufig Fräswerkzeuge zum Einsatz, bei denen die mit dem zu bearbeitenden Werkstoff in Eingriff gelangenden Schneiden an Schneideinsätzen aus einem besonders harten und verschleißbeständigen Material, wie z.B. PKD (polykristallinem Diamant), CBN (kubischem Bornitrid), Hartmetall (cemented carbide), Cermet oder einer Schneidkeramik ausgebildet sind, welche Schneideinsätze an einem Schneidenteil eines Trägerwerkzeugs angeordnet sind, das üblicherweise aus einem zäheren Material, wie z.B. Werkzeugstahl, gebildet ist. Je nach Material der Schneideinsätze und dem Einsatzbereich des Fräswerkzeugs können die Schneideinsätze z.B. lösbar mittels Befestigungsschrauben an Sitzen in dem Schneidenteil des Trägerwerkzeugs befestigt sein oder z.B. stoffschlüssig durch insbesondere Löten an Sitzen in dem Schneidenteil des Trägerwerkzeugs befestigt sein.

Bei Anwendungen von Fräswerkzeugen, bei denen relativ lange Schneidenlängen realisiert werden sollen, ist es bekannt, Walzenstirnfräser (oftmals auch als Igelfräser oder engl. "porcupine cutter" bezeichnet) zu verwenden, bei denen entlang von meist schraubenförmig verlaufenden Spannuten jeweils mehrere Schneideinsätze in der axialen Richtung aufeinander folgend angeordnet werden, die dann zusammen die einsetzbare Schneide bilden.

WO 98/07541 A1 beschreibt einen Walzenstirnfräser, bei dem an einem Schneidenteil eines Trägerwerkzeugs entlang einer Mehrzahl von Spannuten eine Mehrzahl von Schneideinsätzen derart angeordnet ist, dass sich entlang der Spannut operative Hauptschneiden so überlappen, dass effektiv eine durchgängige Schneidkante bereitgestellt wird. Bei dem beschriebenen Walzenstirnfräser verlaufen die Spannuten unter einem negativen Schraubenwinkel und die in radialer Richtung von dem Trägerwerkzeug vorstehenden Hauptschneiden erstrecken sich jeweils unter einem negativen axialen Spanwinkel. In dieser Weise ist erreicht, dass die Sitze für die Schneideinsätze auch bei relativ kleinen Durchmessern des Fräswerkzeugs spanabhebend ausgebildet werden können, ohne die Überlappung der operativen Hauptschneiden aufgeben oder die Anzahl der über den Umfang verteilten Spannuten mit daran entlang angeordneten Schneideinsätzen reduzieren zu müssen. Diese Ausbildung hat jedoch den Nachteil, dass insbesondere bei einem Fräsen von Stufen oder Taschen in dem zu bearbeitenden Werkstück, bei dem auch die von den stirnseitig angeordneten Schneideinsätzen bereitgestellten Stirnschneiden in Eingriff mit dem Werkstück gelangen, kein weicher Schnitt erfolgen kann und die Späne in Richtung der mit den Stirnschneiden erzeugten Werkstückoberfläche gelenkt werden.

US 7,134,811 B2 zeigt ein Fräswerkzeug gemäß dem Oberbegriff von Anspruch 1.

Es ist Aufgabe der vorliegenden Erfindung, ein verbessertes Fräswerkzeug und ein verbessertes Verfahren zum Herstellen eines Schneidenteils eines Fräswerkzeugs bereitzustellen, die auch für kleinere Werkzeugdurchmesser eine hohe Anzahl von Spannuten mit entlang diesen ausgebildeten effektiv durchgängigen Schneidkanten erzielen und gleichzeitig auch für das Fräsen von Stufen oder Taschen einen weichen Schnitt ermöglichen, bei dem die erzeugten Späne zuverlässig von der Werkstückoberfläche abgeführt werden.

Die Aufgabe wird durch ein Fräswerkzeug nach Anspruch 1 gelöst. Vorteilhafte Weiterbildungen sind in den abhängigen Ansprüchen angegeben.

Da sich die Hauptschneiden unter einem positiven axialen Spanwinkel erstrecken wird ein sehr weicher Schnitt beim Fräsen ermöglicht, der sich auch z.B. für Aluminium-Gussteile sehr gut eignet, und die erzeugten Späne werden auch beim Fräsen von Stufen oder Taschen zuverlässig von der erzeugten Oberfläche weggeleitet. Da die Spannuten und die Sitze additiv gefertigt sind, können die positiven axialen Spanwinkel der Hauptschneiden dabei auch bei relativ kleinen Durchmessern des Fräswerkzeugs realisiert werden, ohne die Überlappung der operativen Hauptschneiden aufzugeben oder die Anzahl der über den Umfang verteilten Spannuten mit daran entlang angeordneten Schneideinsätzen reduzieren zu müssen. Ferner kann bei der additiven Herstellung auch für solche Fräswerkzeuge mit relativ kleinem Werkzeugdurchmesser eine effiziente interne Kühlschmiermittelzuführung zu allen Schneideinsätzen ausgebildet werden. Im Gegensatz dazu würde eine herkömmliche, spanabhebende Fertigung der Spannuten und Sitze zur Ausbildung von Sitzen derart, dass diese entlang den Spannuten jeweils durchgängige effektive Schneidkanten mit positivem axialem Spanwinkel bereitstellen und gleichzeitig jeweils drei ebene Anlageflächen zur Abstützung von drei Seiten der Schneideinsätze aufweisen, aufgrund der erforderlichen räumlichen Zugänglichkeit für die spanabhebenden Werkzeuge und aufgrund von deren Schneidengeometrien bei kleineren Durchmessern des Fräswerkzeugs zumindest eine Reduzierung der Anzahl der Spannuten mit entlang diesen angeordneten Schneideinsätzen erfordern. Herkömmlich spanabhebend gefertigte Fräswerkzeuge sind ferner auch bei der Auslegung von internen Kühlmittelkanälen geometrisch sehr stark beschränkt. Die erfindungsgemäße Ausbildung der Spannuten unter einem negativen Schraubenwinkel ermöglicht dabei eine sukzessive additive Fertigung der Spannuten und der Sitze in einer Aufbaurichtung hin zu der Stirnseite des Fräswerkzeugs, ohne dass bei der additiven Fertigung zunächst zusätzliche Stützstrukturen ausgebildet werden müssen, die anschließend wieder mechanisch entfernt werden müssten. Ferner wird in dieser Weise auch die direkte additive Ausbildung der stirnseitigen Sitze mit drei ebenen Anlageflächen für die Schneideinsätze ermöglicht. Die Spannuten können z.B. gleichmäßig, d.h. mit gleichmäßigen Winkelabständen zueinander, über den Umfang des Trägerkörpers verteilt ausgebildet sein. Es ist bevorzugt jedoch auch möglich, dass die Spannuten mit den entlang diesen angeordneten Schneideinsätzen in ungleichmäßigen Winkelabständen über den Umfang des Trägerkörpers verteilt sind, was sich positiv auf die Laufruhe des Fräswerkzeugs auswirkt. Die Spannuten können z.B. alle mit demselben negativen Schraubenwinkel ausgebildet sein, es ist jedoch auch möglich, dass die Spannuten zueinander unterschiedliche negative Schraubenwinkel aufweisen. Der negative Schraubenwinkel der jeweiligen Spannut kann dabei z.B. über die axiale Erstreckung der Spannut konstant sein. Es ist z.B. aber auch möglich, dass sich der Betrag des Schraubenwinkels über die axiale Erstreckung der jeweiligen Spannut verändert. Die Hauptschneiden der Schneideinsätze können z.B. alle denselben positiven axialen Spanwinkel aufweisen. Es ist jedoch z.B. auch möglich, dass der axiale Spanwinkel zwischen den Hauptschneiden, die verschiedenen Spannuten zugeordnet sind, verschieden sind oder dass auch die Hauptschneiden von Schneideinsätzen, die entlang derselben Spannut angeordnet sind, unterschiedliche positive axiale Spanwinkel aufweisen. Ferner kann sich der Betrag des Spanwinkels gegebenenfalls auch entlang einer Hauptschneide ändern. Die Hauptschneiden können sich bevorzugt entlang einer gemeinsamen Zylindermantelfläche erstrecken. Die Spannuten und die Sitze können z.B. insbesondere in einem SLS- (selektives Lasersintern) oder SLM-Verfahren (selektives Laserschmelzen) additiv hergestellt sein, bevorzugt aus einem metallischen Ausgangspulver, wie z.B. Stahlpulver. Es kann z.B. das gesamte Fräswerkzeug additiv gefertigt sein. In diesem Fall sind der Schneidenteil, an dem die Spannuten und die Sitze ausgebildet sind, und ein Befestigungsabschnitt, der eine Befestigungsschnittstelle zum Verbinden mit einer maschinenseitigen Werkzeugaufnahme aufweist, monolithisch additiv aufgebaut. Es ist jedoch z.B. auch möglich, dass nur der Schneidenteil, an dem die Spannuten und Sitze ausgebildet sind, additiv gefertigt ist und dieser Schneidenteil mit einem in herkömmlicher Weise gefertigten Befestigungsabschnitt verbunden ist, bevorzugt stoffschlüssig verbunden sein kann.

Bei einem für einen rechtsdrehenden Betrieb ausgelegten Fräswerkzeug, wie es in den nachfolgenden Ausführungsbeispielen jeweils beschrieben wird, entspricht ein negativer Schraubenwinkel der Richtung einer linksgängigen Schraubenlinie und ein positiver axialer Spanwinkel entspricht der Richtung einer rechtsgängigen Schraubenlinie. Entsprechend einspricht bei einem für einen linksdrehenden Betrieb ausgelegten Fräswerkzeug ein negativer Schraubenwinkel der Richtung einer rechtsgängigen Schraubenlinie und ein positiver axialer Spanwinkel entspricht der Richtung einer linksgängigen Schraubenlinie.

In dem Trägerköper ist eine interne Kühlmittelzuführung zum Zuführen von Kühlmittel zu den Spannuten ausgebildet, die eine Mehrzahl von Kühlmittelkanälen mit in Richtung der Sitze verlaufenden Kühlmittelaustritten aufweist. Somit ist eine besonders gezielte Kühlmittelzufuhr zu den mit dem zu zerspanenden Material in Eingriff gelangenden Schneiden möglich. Aufgrund der additiven Fertigung zumindest des Schneidenteils des Fräswerkzeugs, der die Spannuten und die Sitze aufweist, können die Kühlmittelkanäle bezüglich ihrem Verlauf und ihrer Querschnittsform gezielt im Hinblick auf die gewünschte Kühlmittelverteilung ausgelegt werden.

Zumindest ein Teil der Kühlmittelkanäle hat einen in einer vorgegebenen Kühlmittelströmungsrichtung gekrümmten Verlauf. Somit können durch den Strömungswiderstand verursachte Druckabfälle minimiert werden und das Kühlmittel kann besonders zielgerichtet zu den Schneideinsätzen geleitet werden. Der gekrümmte Verlauf in der Kühlmittelströmungsrichtung, also in der Richtung, in der das Kühlmittel im Betrieb strömt, ist dadurch ermöglicht, dass der Schneidenteil additiv gefertigt ist.

Durch den gekrümmten Verlauf des Teils der Kühlmittelkanäle wird das Kühlmittel im Betrieb umgelenkt wird.

Die Kühlmittelkanäle sind relativ geringen Durchmessers und erstrecken sich dabei ausgehend von Kühlmittelverteilerkavitäten, die einen größeren Durchmesser aufweisen.

Gemäß einer Weiterbildung sind in den Spannuten jeweils mehrere Kühlmittelaustritte ausgebildet. In diesem Fall kann eine besonders zielgerichtete und effiziente Kühlung der Schneideinsätze erfolgen. Dabei können z.B. für alle Schneideinsätze separate Kühlmittelaustritte vorgesehen sein. Um Strömungswiderstände gering zu halten, können jedoch auch gemeinsame Kühlmittelaustritte für mehrere Schneideinsätze vorgesehen werden.

Gemäß einer Weiterbildung sind die Sitze entlang den Spannuten jeweils derart angeordnet, dass die Flugkreise der Hauptschneiden der daran befindlichen Schneideinsätze in Axialrichtung überlappen. Mit anderen Worten bilden die Hauptschneiden, die entlang der jeweiligen Spannut an unterschiedlichen axialen Positionen angeordnet sind, obwohl sie in Umfangsrichtung zueinander versetzt angeordnet sind, aufgrund der Überlappung bezüglich der Axialrichtung lückenlos eine durchgehende effektiv wirkende Schneidkante aus.

An die Hauptschneiden schließen sich unter einem positiven radialen Spanwinkel verlaufende Spanflächen an. Die Realisierung von positiven radialen Spanwinkeln trägt ebenfalls zu einem weichen Schnitt bei und die erzeugten Späne werden zuverlässig von der mit der jeweiligen Hauptschneide bearbeiteten Werkstückoberfläche weggeleitet. Die Ausgestaltung der Sitze derart, dass positive radiale Spanwinkel ermöglicht sind, ohne die Anzahl der Spannuten mit daran entlang angeordneten Schneideinsätzen bei kleineren Durchmessern des Fräswerkzeugs reduzieren zu müssen, ist durch die additive Fertigung des Schneidenteils ermöglicht.

Gemäß einer Weiterbildung weist der Trägerkörper einen im Wesentlichen ringförmigen bzw. hohlzylindrischen Schneidenteil, an dessen Außenumfang die Spannuten und Sitze ausgebildet sind, und einen Befestigungsabschnitt mit einer Befestigungsschnittstelle zum Verbinden mit einer maschinenseitigen Werkzeugaufnahme auf. Der Schneidenteil und der Befestigungsabschnitt können dabei monolithisch additiv gefertigt sein, es ist jedoch bevorzugt möglich, dass nur der Schneidenteil additiv gefertigt ist und mit einem herkömmlich spanabhebend gefertigten Befestigungsabschnitt verbunden ist.

Gemäß einer Weiterbildung ist der Befestigungsabschnitt materialabtragend gefertigt und der Schneidenteil und der Befestigungsabschnitt sind stoffschlüssig miteinander verbunden. In diesem Fall kann das Fräswerkzeug insgesamt kostengünstig gefertigt werden und über die stoffschlüssige Verbindung ist eine hohe Stabilität gewährleistet.

Gemäß einer Weiterbildung sind die Schneideinsätze stoffschlüssig an den Sitzen befestigt. Die Schneideinsätze können dabei insbesondere durch Löten an den Sitzen befestigt sein. In diesem Fall ist keine mechanische Bearbeitung der additiv gefertigten Sitze vor dem Befestigen der Schneideinsätze nötig. Bevorzugt können zumindest die Schneiden der Schneideinsätze aus einem Ultrahartwerkstoff wie PKD (polykristalliner Diamant), CBN (kubisches Bornitrid) oder einer Schneidkeramik gebildet sein. Grundsätzlich ist jedoch auch eine Ausbildung der Schneideinsätze aus z.B. Hartmetall (cemented carbide), Cermet oder einer Schneidkeramik möglich. Die Schneideinsätze können z.B. anstelle der stoffschlüssigen Befestigung auch mittels Befestigungsschrauben an den Sitzen befestigt sein.

Wenn die Sitze zumindest drei ebene Anlageflächen zur Abstützung von verschiedenen Seiten der Schneideinsätze aufweisen, können die Schneideinsätze besonders exakt positioniert und an den Sitzen befestigt werden.

Die Aufgabe wird auch durch ein Verfahren zum Herstellen eines Schneidenteils eines Fräswerkzeugs nach Anspruch 8 gelöst. Vorteilhafte Weiterbildungen sind in den abhängigen Ansprüchen angegeben.

Mit dem beschrieben Verfahren wird ein weicher Schnitt des Fräswerkzeugs ermöglicht, wobei auch bei kleinen Durchmessern des Fräswerkzeugs die Anzahl der Spannnuten mit entlang diesen angeordneten Sitzen nicht nachteilig reduziert zu werden braucht und durchgängige effektive Schneidkanten entlang den jeweiligen Spannuten aufrechterhalten werden können. Ferner kann eine effiziente Kühlmittelversorgung zu allen Sitzen vorteilhaft ausgebildet werden, der Aufbau kann ohne zusätzliche Stützstrukturen erfolgen und auch stirnseitige Sitze für Schneideinsätze können mit drei Anlageflächen für drei Seiten der jeweiligen Schneideinsätze additiv ausgebildet werden. Es kann in dem Verfahren z.B. nur der Schneidenteil, der die Spannuten und die entlang diesen angeordneten Sitze für Schneideinsätze aufweist, additiv hergestellt werden und anschließend mit einem z.B. konventionell gefertigten Befestigungsabschnitt, der eine Befestigungsschnittstelle zum Verbinden mit einer maschinenseitigen Werkzeugaufnahme aufweist, zu dem Trägerkörper des Fräswerkzeugs zusammengefügt werden. Alternativ dazu ist es z.B. auch möglich, den gesamten Trägerkörper, also den Schneidenteil und den Befestigungsabschnitt, additiv aufzubauen.

Gemäß einer Weiterbildung wird eine Mehrzahl von Sitzen an einer Stirnseite des Schneidenteils zur Aufnahme von Schneideinsätzen derart, dass sie axial von der Stirnseite des Schneidenteils hervorstehen, ausgebildet und der Schneidenteil wird sukzessiv schichtweise von einer von der Stirnseite abgewandten Schaftseite zu der Stirnseite hin aufgebaut. In diesem Fall kann der Schneidenteil ohne zusätzliche Stützstrukturen, die anschließend wieder mechanisch entfernt werden müssten, aufgebaut werden und auch die Sitze an der Stirnseite des Schneidenteils können bei der additiven Herstellung mit jeweils drei ebenen Anlageflächen für drei Seiten der Schneideinsätze ausgebildet werden. Das Fräswerkzeug kann in diesem Fall als Walzenstirnfräser ausgebildet werden, mit dem auch Stufen oder Taschen in dem zu bearbeitenden Werkstück bearbeitet werden können.

Bei dem additiven Herstellungsverfahren wird eine interne Kühlmittelzuführung zum Zuführen von Kühlmittel zu den Spannuten ausgebildet, die eine Mehrzahl von Kühlmittelkanälen mit in Richtung der Sitze verlaufenden Kühlmittelaustritten hat. Durch die Ausbildung der Kühlmittelkanäle bei der additiven Herstellung kann die Form der Kühlmittelkanäle derart optimiert ausgebildet werden, dass möglichst geringe Strömungswiderstände und Druckverluste in der internen Kühlmittelzuführung auftreten.

Das Ausbilden der Kühlmittelkanäle erfolgt derart, dass diese zumindest bereichsweise einen gekrümmten Verlauf aufweisen. In dieser Weise kann das Kühlmittel besonders gezielt in Richtung der Sitze für Schneideinsätze gelenkt werden und Strömungswiderstände in der internen Kühlmittelzuführung können effizient reduziert werden.

Das Ausbilden der Kühlmittelkanäle erfolgt ferner derart, dass diese zumindest bereichsweise den gekrümmten Verlauf aufweisen, so dass das Kühlmittel im Betrieb umgelenkt wird.

Ferner werden Kühlmittelverteilerkavitäten ausgebildet, wobei die Kühlmittelkanäle mit relativ geringen Durchmessern ausgebildet werden und sich dabei ausgehend von den Kühlmittelverteilerkavitäten erstrecken, die einen größeren Durchmesser aufweisen.

Gemäß einer Weiterbildung werden in den Spannuten jeweils mehrere Kühlmittelaustritte ausgebildet. In diesem Fall wird eine besonders effiziente und zielgerichtete Zuführung von Kühlmittel zu den Schneideinsätzen bereitgestellt. Dabei können z.B. für jeden Sitz bzw. daran angeordneten Schneideinsatz separate Kühlmittelaustritte ausgebildet werden. Es können aber z.B. auch jeweils gemeinsame Kühlmittelaustritte für mehrere Sitze vorgesehen werden. Aufgrund der additiven Herstellung kann die Form der Kühlmittelkanäle und der Kühlmittelaustritte dabei in einfacher Weise im Hinblick auf eine möglichst gute Verteilung des Kühlmittels ausgelegt werden.

Gemäß einer Weiterbildung werden die Sitze mit jeweils zumindest drei ebenen Anlageflächen zur Abstützung von drei verschieden Seiten der Schneideinsätze ausgebildet. In diesem Fall können die Schneideinsätze besonders zuverlässig und genau an den Sitzen positioniert werden, ohne dass eine zusätzliche mechanische Bearbeitung der Sitze erforderlich wäre.

Gemäß einer Weiterbildung weist das Verfahren ferner den Schritt auf: stoffschlüssiges Verbinden des Schneidenteils mit einem separat ausgebildeten Befestigungsabschnitt, der eine Befestigungsschnittstelle zum Verbinden mit einer maschinenseitigen Werkzeugaufnahme aufweist. In diesem Fall kann der Befestigungsabschnitt z.B. schnell und kostengünstig in einem herkömmlichen zerspanenden Verfahren hergestellt werden. Das durch das stoffschlüssige Verbinden gefertigte Fräswerkzeug weist ein hohe Stabilität auf. Das stoffschlüssige Verbinden kann dabei insbesondere durch Schweißen oder Löten erfolgen.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische perspektivische Ansicht eines Fräswerkzeugs gemäß einer ersten Ausführungsform;
- Fig. 2:: eine schematische Stirnansicht des Fräswerkzeugs aus Fig. 1;
- Fig. 3:: eine schematische perspektivische Ansicht des Trägerkörpers des Fräswerkzeugs;
- Fig. 4:: eine schematische perspektivische Darstellung des Schneidenteils des Fräswerkzeugs gemäß der ersten Ausführungsform;
- Fig. 5:: eine schematische Explosionsdarstellung des Fräswerkzeugs mit Blickrichtung senkrecht zu der Längsachse des Fräswerkzeugs;
- Fig. 6:: eine schematische Schnittdarstellung des Schneidenteils in einer Ebene senkrecht zu der Längsachse;
- Fig. 7:: eine vergrößerte Darstellung in Seitenansicht des Schneidenteils im Bereich von dessen Stirnseite;
- Fig. 8:: eine Seitenansicht des Fräswerkzeugs gemäß der ersten Ausführungsform;
- Fig. 9:: eine schematische perspektivische Ansicht eines Fräswerkzeugs gemäß einer zweiten Ausführungsform;
- Fig. 10:: eine schematische perspektivische Ansicht eines Fräswerkzeugs gemäß einer dritten erfindungsgemäßen Ausführungsform;
- Fig. 11:: eine schematische Seitenansicht des Fräswerkzeugs gemäß der dritten Ausführungsform;
- Fig. 12:: eine schematische Detaildarstellung der internen Kühlmittelzuführung bei dem Fräswerkzeug gemäß der dritten Ausführungsform; und
- Fig. 13:: eine schematische Schnittdarstellung in einer Ebene senkrecht zu der Längsachse bei dem Fräswerkzeug gemäß der dritten Ausführungsform.

### ERSTE AUSFÜHRUNGSFORM

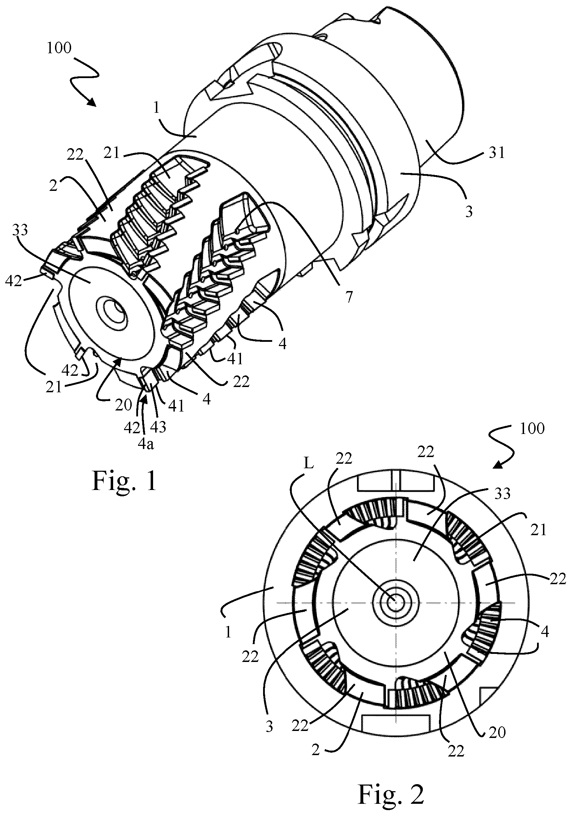

Eine erste Ausführungsform eines Fräswerkzeugs 100 wird im Folgenden unter Bezugnahme auf die Fig. 1 bis Fig. 8 beschrieben.

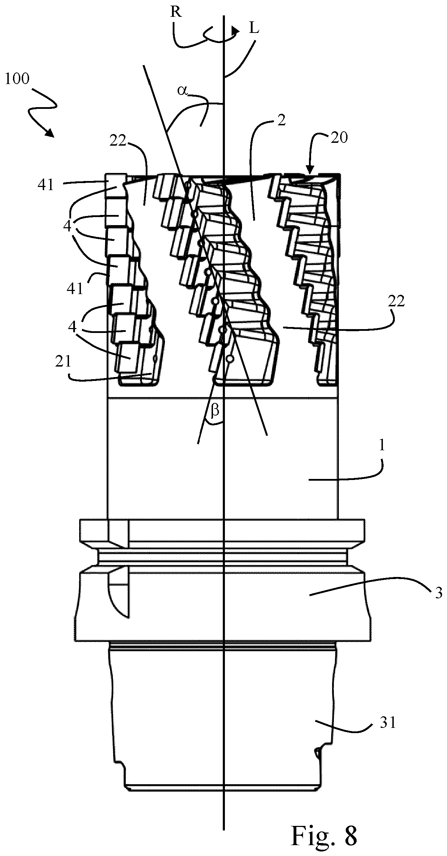

Wie in Fig. 1 zu sehen ist, ist das Fräswerkzeug 100 gemäß der ersten Ausführungsform als ein Walzenstirnfräser bzw. Igelfräser mit Stirnschneiden ausgebildet. Das dargestellte Fräswerkzeug 100 ist dabei als rechtsschneidendes Werkzeug ausgebildet, dessen vorgegebene Rotationsrichtung R in Fig. 8 schematisch angegeben ist.

Das Fräswerkzeug 100 hat einen Trägerkörper 1, der sich entlang einer Längsachse L erstreckt, die der Rotationsachse des Fräswerkzeugs 100 in dessen Betrieb entspricht. Der Trägerkörper 1 kann z.B. aus einem Werkzeugstahl gebildet sein. Der Trägerkörper 1 hat einen Schneidenteil 2, an dem eine Mehrzahl von Spannuten 21 ausgebildet ist, und einen Befestigungsabschnitt 3, der mit einer Befestigungsschnittstelle 31 zum Befestigen an einer maschinenseitigen Aufnahme einer Bearbeitungsmaschine ausgebildet ist. Obwohl in dem konkret dargestellten Ausführungsbeispiel beispielhaft eine sogenannte HSK-Schnittstelle (Hohlschaftkegel-Schnittstelle) als Befestigungsschnittstelle 31 dargestellt ist, sind auch andere Ausgestaltungen der Befestigungsschnittstelle 31 möglich, wie insbesondere andere auf dem Markt befindliche Schnittstellen für Fräswerkzeuge. Bei der ersten Ausführungsform sind der Schneidenteil 2 und der Befestigungsabschnitt 3 separat gefertigte Komponenten, die anschließend miteinander verbunden wurden, insbesondere stoffschlüssig miteinander verbunden sein können.

Die Spannuten 21 sind an dem Schneidenteil 2 so ausgebildet, dass sie sich bis zu der Stirnseite 20 des Schneidenteils 2 erstrecken. Bei dem dargestellten Ausführungsbeispiel sind insgesamt sechs über den Umfang des Schneidenteils 2 verteilte Spannuten 21 ausgebildet. Es können jedoch auch mehr als sechs oder weniger als sechs Spannuten 21 an dem Schneidenteil 2 ausgebildet sein, insbesondere können bei kleineren Werkzeugdurchmessern des Fräswerkzeugs 100 weniger Spannuten 21 und bei größeren Werkzeugdurchmessern des Fräswerkzeugs 100 mehr Spannuten 21 vorgesehen werden. Die Spannuten 21 können dabei z.B. in gleichmäßigen Winkelabständen über den Umfang des Schneidenteils 2 verteilt angeordnet sein, also bei sechs Spannnuten jeweils um 60° (= 360°/6) zueinander versetzt angeordnet sein. Bevorzugt ist es jedoch möglich, dass die Spannuten 21 ungleich über den Umfang des Schneidenteils 2 verteilt angeordnet sind, also unter verschiedenen Winkelabständen, um Vibrationen im Betrieb des Fräswerkzeugs 100 zu verringern. Wie insbesondere in der Stirnansicht von Fig. 2 zu sehen ist, sind die Spannuten 21 bei dem dargestellten Ausführungsbeispiel ungleich über den Umfang verteilt ausgebildet. Die Spannuten 21 erstrecken sich jeweils zwischen Stegen 22 und sind gegenüber dem Außenumfang des Schneidenteils 2 vertieft ausgebildet.

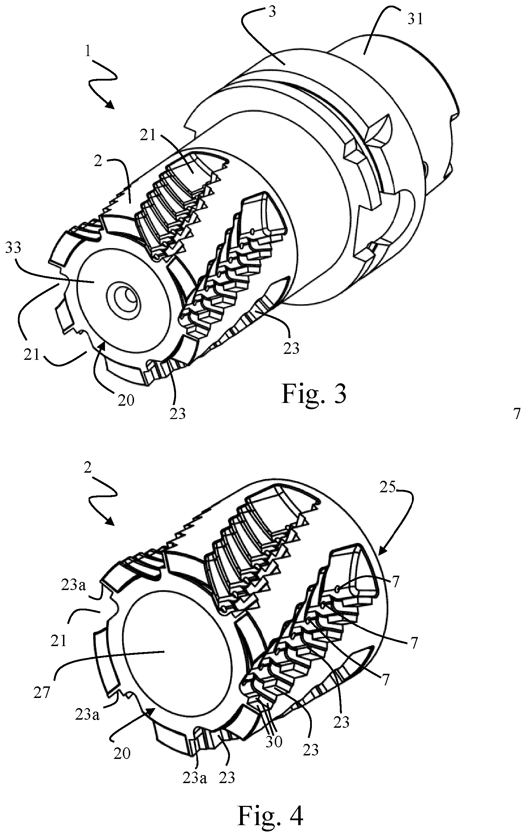

Entlang den Spannuten 21 sind jeweils Sitze 23, 23a ausgebildet, die jeweils dazu ausgebildet sind, einen Schneideinsatz 4, 4a aufzunehmen. Die Sitze 23, 23a sind dabei z.B. in den Fig. 3 und Fig. 4 zu sehen, in denen der Trägerkörper 1 bzw. der Schneidenteil 2 ohne daran angeordnete Schneideinsätze 4, 4a gezeigt ist.

Bei dem konkret dargestellten Ausführungsbeispiel sind entlang jeder Spannut 21 jeweils sieben Sitze 23, 23a für Schneideinsätze 4, 4a ausgebildet, wie insbesondere in den Fig. 4 und Fig. 8 zu sehen ist. Je nach zu erzielender axialer Länge des Schneidenteils 2 können jedoch auch mehr als sieben oder weniger als sieben Sitze 23, 23a entlang den Spannuten 21 ausgebildet sein. Die Sitze 23, 23a sind dabei derart ausgebildet, dass die an diesen angeordneten Schneideinsätze 4, 4a jeweils mit einer Hauptschneide 41 über den Außenumfang des Schneidenteils 2 hervorstehen. Die Hauptschneiden 41 der Schneideinsätze 4 verlaufen dabei bei der Ausführungsform entlang einer gemeinsamen umhüllenden Zylindermantelfläche. Die stirnseitig ausgebildeten Sitze 23a sind ferner derart ausgebildet, dass die an diesen befestigten Schneideinsätze 4a auch jeweils mit einer Stirnschneide 42 in axialer Richtung von dem Schneidenteil 2 hervorstehen. Die Stirnschneiden 42 erstrecken sich dabei im Wesentlichen in einer Ebene senkrecht zu der Längsachse L des Schneidenteils 2. Die Stirnschneiden 42 können jedoch z.B. auch mit zunehmendem Abstand von der zugeordneten Hauptschneide 41 leicht in Richtung Befestigungsabschnitt 3 verlaufend ausgebildet sein, d.h. leicht nach innen freigestellt ausgebildet sein. Die Sitze 23, und dabei insbesondere auch die stirnseitig angeordneten Sitze 23a, sind derart ausgebildet, dass sie jeweils drei ebene Anlageflächen 30 zur Abstützung von drei verschiedenen Seiten der Schneideinsätze 4, 4a aufweisen, wie insbesondere in Fig. 4 zu sehen ist.

Sitze 23, 23a sind derart ausgebildet, dass die Schneideinsätze 4, 4a in einer sogenannten radialen Anordnung an dem Schneidenteil 2 angeordnet sind, d.h. dass sich die Haupterstreckungsebene der Schneideinsätze 4, 4a jeweils im Wesentlichen in radialer Richtung erstreckt. Die Schneideinsätze 4, 4a sind jedoch gegenüber einer exakt in der radialen Richtung verlaufenden Ausrichtung leicht verkippt angeordnet, wie im Folgenden noch eingehender beschrieben wird.

Die Hauptschneiden 41 der Schneideinsätze 4, 4a, die entlang derselben Spannut 21 angeordnet sind, sind dabei derart gestaffelt angeordnet, dass sie zwar bezüglich der Umfangsrichtung zueinander versetzt sind, sich bezüglich der axialen Richtung des Schneidenteils 2 aber überlappen, sodass die entlang der jeweiligen Spannut 21 angeordneten Hauptschneiden 41 zusammen eine effektiv wirkende durchgehende Umfangsschneide bilden. Mit anderen Worten überlappen sich die Flugkreise der Hauptschneiden 41 der Schneideinsätze 4, 4a, die entlang einer gemeinsamen Spannut 21 angeordnet sind, in Axialrichtung bezüglich der Längsachse L.

Bei dem dargestellten konkreten Beispiel sind die Schneideinsätze 4, 4a stoffschlüssig an den jeweiligen Sitzen 23, 23a befestigt, z.B. durch Löten. In diesem Fall können die Spanflächen 43 und die sich entlang diesen erstreckenden Hauptschneiden 41 und Stirnschneiden 42 der Schneideinsätze 4, 4a z.B. aus einem Ultrahartwerkstoff, wie insbesondere PKD oder CBN gebildet sein, der z.B. auf einem lötbaren Schneideinsatzgrundkörper aus z.B. Hartmetall angeordnet sein kann. In einer alternativen Ausgestaltung können die Schneideinsätze 4, 4a jedoch z.B. auch lösbar mittels Befestigungsschrauben an den jeweiligen Sitzen 23, 23a befestigt sein.

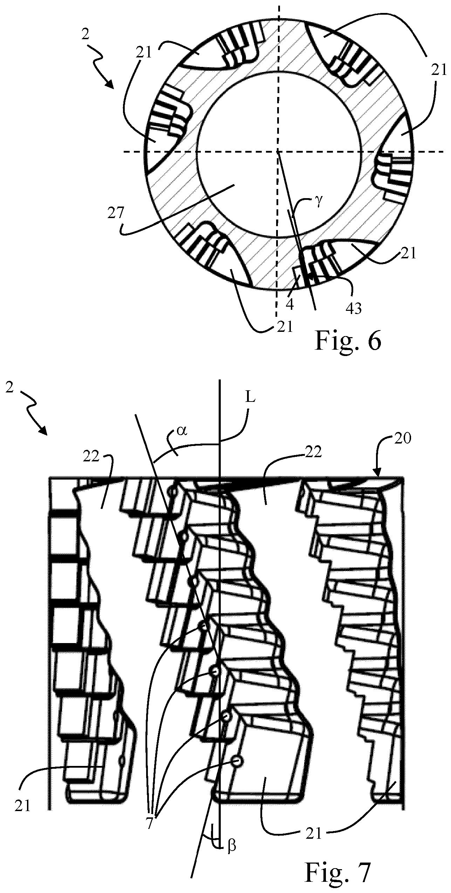

Wie in den Figuren zu sehen ist, verlaufen die Spannuten 21 schraubenförmig um die Längsachse L. Die Spannuten 21 verlaufen dabei unter einem negativen Schraubenwinkel α (α < 0°) zu der Längsachse L, wie in den Fig. 7 und Fig. 8 zu sehen ist. Bei dem in den Figuren dargestellten, für ein rechtsschneidendes Fräswerkzeug ausgelegten Schneidenteil 2 bedeutet dies, dass sich die Spannuten 21 entsprechend einer linksgängigen Schraube erstrecken.

Die Sitze 23, 23a und die daran befestigten Schneideinsätze 4, 4a sind derart verkippt angeordnet, dass die Hauptschneiden 41 jeweils unter einem positiven axialen Spanwinkel β (β > 0°) angeordnet sind, wie ebenfalls in den Fig. 7 und Fig. 8 zu sehen ist. Der axiale Spanwinkel β ist der Winkel, den die Hauptschneide 41 bei radialer Blickrichtung auf die Hauptschneide 41 mit der Längsachse L einschließt. Mit anderen Worten sind die Hauptschneiden 41 derart weich schneidend ausgerichtet, dass beim Einsatz des Fräswerkzeugs 100 abgehobene Späne mit einer Richtungskomponente in Richtung von der Stirnseite 20 des Schneidenteils 2 weg abgeführt werden. Die sich an die Hauptschneiden 41 anschließenden Spanflächen 43 verlaufen bei der Ausführungsform ferner unter einem positiven radialen Spanwinkel γ, wie in Fig. 6 schematisch eingezeichnet ist. Der radiale Spanwinkel γ ist der Winkel, den die Spanflächen 43 bei in einem Schnitt senkrecht zu der Längsachse L mit einer radialen Linie von der Längsachse L zu der Hauptschneide 41 einschließen. Mit anderen Worten sind die Spanflächen 43 derart ausgerichtet, dass bei dem Einsatz des Fräswerkzeugs 100 Späne mit einer von der mit der Hauptschneide 41 bearbeiteten Werkstückoberfläche weggerichteten Richtungskomponente in radialer Richtung abgeführt werden.

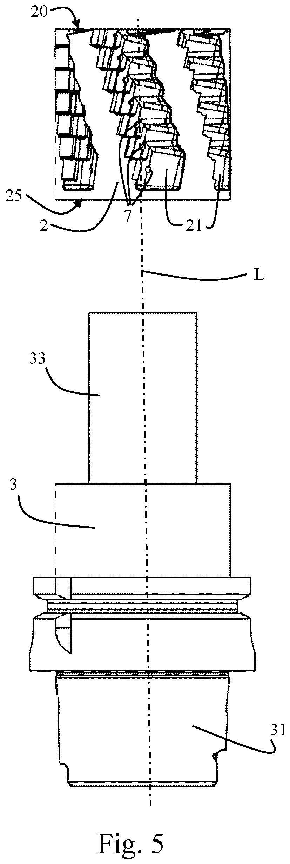

Wie bereits erläutert wurde, sind bei der ersten Ausführungsform der Schneidenteil 2, an dem die Spannuten 21 und die Sitze 23, 23a ausgebildet sind, und der Befestigungsabschnitt 3, an dem die Befestigungsschnittstelle 31 ausgebildet ist, als separate Bauteile ausgebildet, die zu dem Trägerkörper 1 zusammengesetzt sind. Dies ist insbesondere in der schematischen Explosionsdarstellung von Fig. 5 gezeigt.

Wie insbesondere in den Fig. 4, Fig. 5 und Fig. 6 zu sehen ist, hat der Schneidenteil 2 bei der ersten Ausführungsform eine ringförmige bzw. im Wesentlichen hohlzylindrische Grundform, an deren Außenumfang die Spannuten 21 und Sitze 23, 23a ausgebildet sind. Der Schneidenteil 2 ist ein additiv gefertigter Körper, der schichtweise durch Abschneiden eines pulverförmigen Ausgangsmaterials und jeweiliges selektives Verfestigen an den Stellen in der jeweiligen Schicht, die der Kontur des Schneidenteils 2 entsprechen, gebildet ist. Das Schneidenteil 2 ist dabei insbesondere aus Metallpulver in einem SLS-Verfahren (selektives Lasersintern) bzw. SLM-Verfahren (selektives Laserschmelzen, selective laser melting) gebildet. Das Schneidenteil 2 kann insbesondere aus einem Stahlpulver additiv aufgebaut sein. Aufgrund des schichtweisen additiven Aufbaus hat der Schneidenteil 2 eine mikroskopische Gefügestruktur, die sich von der Gefügestruktur eines herkömmlich hergestellten Bauteils unterscheidet.

Der Schneidenteil 2 weist aufgrund seiner ringförmigen Form einen inneren Hohlraum 27 auf, der sich durchgängig von der Stirnseite 20 bis zu einer von der Stirnseite 20 abgewandten Schaftseite 25 des Schneidenteils 2 erstreckt.

Der Befestigungsabschnitt 3 weist einen zentralen Vorsprung 33 auf, dessen Außenkontur derart an die Form des Hohlraums 27 in dem Schneidenteil 2 angepasst ist, dass der zentrale Vorsprung 33 in den Hohlraum 27 eingeführt werden kann, um so den Trägerkörper 1 des Fräswerkzeugs 100 auszubilden. In dem konkret in den Figuren dargestellten Ausführungsbeispiel hat der Vorsprung 33 eine im Wesentlichen zylindrische Außenkontur und der Hohlraum 27 hat eine entsprechende hohlzylindrische Innenkontur. Es sind jedoch auch andere Realisierungen möglich, bei denen der Vorsprung 33 und der Hohlraum 27 andere zueinander korrespondierende geometrische Formen aufweisen.

Bei der ersten Ausführungsform kann der Befestigungsabschnitt 3 insbesondere z.B. in einem herkömmlichen spanabhebenden Herstellungsverfahren gebildet sein. Der Befestigungsabschnitt 3 kann dabei insbesondere z.B. aus Stahl ausgebildet sein. In dieser Weise kann das additiv aufzubauende Volumen, also das Volumen des Schneidenteils 2, relativ klein gehalten werden, was sich vorteilhaft auf die Herstellungskosten auswirkt.

Bei der ersten Ausführungsform ist in dem Trägerkörper 1, insbesondere in dem Schneidenteil 2, eine interne Kühlmittelzuführung ausgebildet, über die Kühlmittel (bzw. Kühlschmiermittel) zu den Spannuten 21 zugeführt werden kann. Die interne Kühlmittelzuführung hat eine Mehrzahl von Kühlmittelkanälen, die in die Spannuten 21 mündende Kühlmittelaustritte 7 haben, wie insbesondere in Fig. 7 zu sehen ist. Die Kühlmittelaustritte 7 sind dabei derart ausgerichtet, dass aus diesen austretendes Kühlmittel in Richtung der Sitze 23, 23a bzw. der an diesen befestigten Schneideinsätze 4, 4a geleitet wird. In den einzelnen Spannuten 21 sind dabei jeweils mehrere Kühlmittelaustritte 7 realisiert. Die interne Kühlmittelzuführung wird bei der Ausführungsform direkt bei der additiven Herstellung des Schneidenteils 2 aus pulverförmigem Ausgangsmaterial ausgebildet, sodass die Kühlmittelkanäle mit einer Form versehen sind, die nicht nachträglich durch spanabhebende Bearbeitung ausgebildet werden könnte. Insbesondere hat zumindest ein Teil der Kühlmittelkanäle einen in der vorgegebenen Kühlmittelströmungsrichtung des jeweiligen Kühlmittelkanals gekrümmten Verlauf.

Bei einem Verfahren zum Herstellen des Schneidenteils 2 wird der Schneidenteil 2 ausgehend von der Schaftseite 25 zu der Stirnseite 20 Schicht für Schicht aufgebaut. Dabei wird jeweils eine Schicht aus pulverförmigem Ausgangsmaterial aufgetragen und das Ausgangsmaterial wird an den Stellen in der jeweiligen Schicht, die dem Querschnitt des Schneidenteils 2 in der jeweiligen Schicht entsprechen, verfestigt. Anschließend wird die nachfolgende Schicht aufgetragen und die Schritte werden wiederholt, bis das Schneidenteil 2 fertig aufgebaut ist. Bei dem Verfahren werden dabei auch die Kühlmittelkanäle im Inneren des Schneidenteils 2 Schicht für Schicht mitaufgebaut. Bei dem Aufbau von der Schaftseite 25 in Richtung zu der Stirnseite 20 kann wegen der zuvor beschriebenen Struktur der Spannuten 21 und der Sitze 23, 23a der Schneidenteil 2 mit den Spannuten 21 und den Sitzen 23, 23a dabei ohne die Ausbildung von zusätzlichen Stützstrukturen direkt in seiner finalen Form aufgebaut werden und es ist keine spanabhebende Nachbearbeitung erforderlich.

Der derart hergestellte Schneidenteil 2 wird anschließend mit dem Befestigungsabschnitt 3 verbunden, um den Trägerkörper 1 auszubilden. Der Schneidenteil 2 und der Befestigungsabschnitt 3 können dabei insbesondere stoffschlüssig miteinander verbunden werden, z.B. durch Schweißen. An den Sitzen 23, 23a des Trägerkörpers 1 werden anschließend die Schneideinsätze 4, 4a befestigt, was insbesondere stoffschlüssig durch Löten erfolgen kann, um das Fräswerkzeug 10 auszubilden. Durch die jeweils drei ebenen Anlageflächen 30 der Sitze 23, 23a wird dabei eine besonders exakte Positionierung der Schneideinsätze 4, 4a erreicht.

### ZWEITE AUSFÜHRUNGSFORM

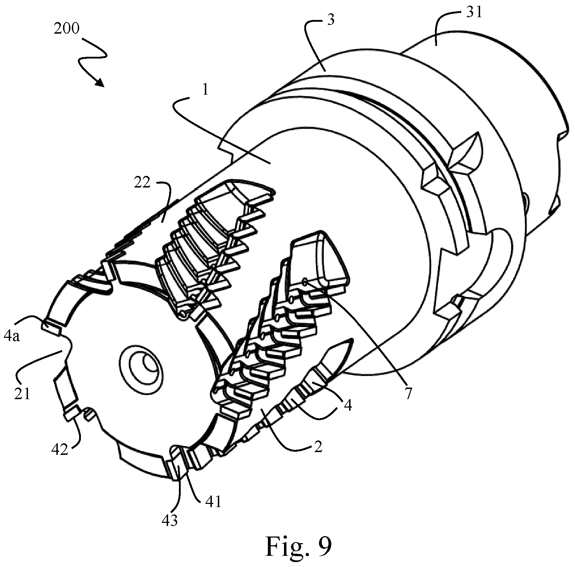

Eine zweite Ausführungsform des Fräswerkzeugs wird im Folgenden kurz unter Bezug auf Fig. 9 beschrieben.

Zur Vermeidung von Wiederholungen werden dabei nur die Unterschiede gegenüber der zuvor beschriebenen ersten Ausführungsform eingehender beschrieben und es werden dieselben Bezugszeichen wie bei der Beschreibung der ersten Ausführungsform verwendet.

Das Fräswerkzeug 200 gemäß der zweiten Ausführungsform unterscheidet sich nur darin von dem Fräswerkzeug 100 gemäß der ersten Ausführungsform, dass der Schneidenteil 2 und der Befestigungsabschnitt 3 nicht separat gefertigte und anschließend zu dem Trägerkörper 11 zusammengefügte Komponenten sind, sondern der gesamte Trägerkörper 11, der den Schneidenteil 2 und den Befestigungsabschnitt 3 aufweist, einstückig bzw. monolithisch additiv gefertigt ist.

Bei der zweiten Ausführungsform werden also der Befestigungsabschnitt 3 und der Schneidenteil 2 in dem additiven Herstellungsverfahren Schicht für Schicht aus dem pulverförmigen Ausgangsmaterial aufgebaut.

### DRITTTE AUSFÜHRUNGSFORM

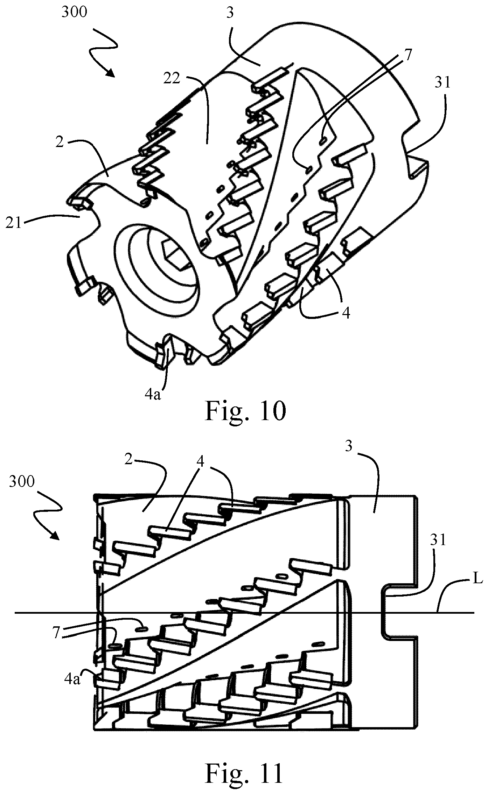

Eine dritte erfindungsgemäße Ausführungsform des Fräswerkzeugs wird im Folgenden kurz unter Bezug auf die Fig. 10 bis Fig. 13 beschrieben.

Zur Vermeidung von Wiederholungen werden dabei wiederum nur die Unterschiede gegenüber den zuvor beschriebenen Ausführungsformen eingehender beschrieben und es werden dieselben Bezugszeichen verwendet.

Bei dem Fräswerkzeug 300 gemäß der dritten Ausführungsform sind der Schneidenteil 2 und der Befestigungsabschnitt 3 wie bei der zweiten Ausführungsform einstückig bzw. monolithisch additiv gefertigt ausgebildet.

Das Fräswerkzeug 300 gemäß der dritten Ausführungsform unterscheidet sich aber in der Ausgestaltung des Befestigungsabschnitts 3 und insbesondere in der Ausgestaltung der Befestigungsschnittstelle 31 von der zuvor beschriebenen zweiten Ausführungsform. Bei der dritten Ausführungsform ist das Fräswerkzeug 300 als ein sogenannter Aufsteckfräser ausgebildet und mit einer entsprechenden Befestigungsschnittstelle 31 versehen.

Bei der dritten Ausführungsform weisen ferner die Kühlmittelaustritte 7 im Unterschied zu den zuvor beschriebenen Ausführungsformen eine unrunde, längliche Querschnittsform auf, wie insbesondere in Fig. 11 zu sehen ist. Es ist jedoch zu beachten, dass die Kühlmittelaustritte 7 auch bei der ersten und/oder zweiten Ausführungsform eine unrunde Querschnittsform aufweisen können.

Die unrunde Querschnittsform der Kühlmittelaustritte 7 ermöglicht eine düsenartige Ausgestaltung, bei der das Kühlmittel besonders zielgerichtet zu den Schneiden geleitet wird.

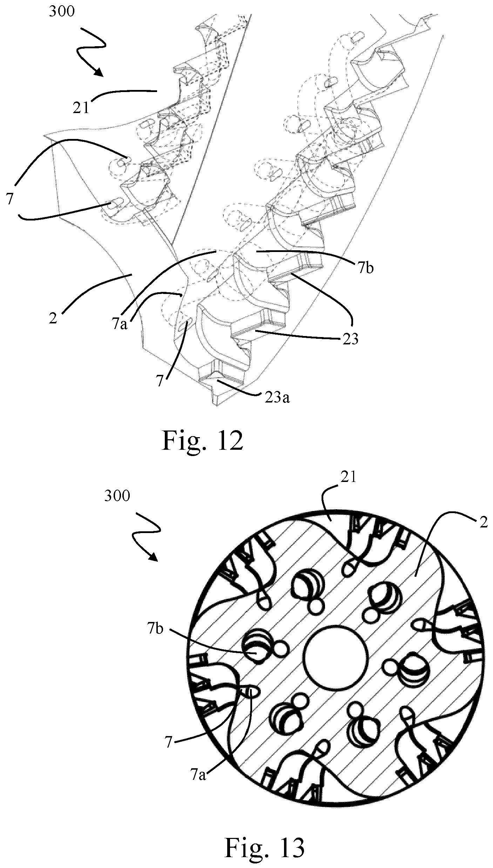

Anhand der dritten Ausführungsform und insbesondere der Fig. 12 und Fig. 13 wird ferner im Folgenden die interne Kühlmittelzuführung zum Zuführen von Kühlmittel zu den Spannuten 21 noch eingehender beschrieben, die in Fig. 12 gestrichelt dargestellt ist. Dabei ist zu beachten, dass auch bei der ersten und/oder der zweiten Ausführungsform die interne Kühlmittelzuführung dieselben Merkmale aufweisen kann.

In Fig. 12 sind zur Vereinfachung die Sitze 23, 23a ohne an diesen befestigte Schneideinsätze dargestellt. Wie in Fig. 12 zu sehen ist, verlaufen die Kühlmittelkanäle 7a, die sich zu den Kühlmittelaustritten 7 erstrecken, in der Kühlmittelströmungsrichtung gekrümmt, sodass das Kühlmittel im Betrieb durch die Krümmung umgelenkt wird.

Die sich jeweils zu den Kühlmittelaustritten 7 erstreckenden Kühlmittelkanäle 7a relativ geringen Durchmessers erstrecken sich dabei insbesondere ausgehend von Kühlmittelverteilerkavitäten 7b, die einen größeren Querschnitt aufweisen. In dieser Weise ist eine zuverlässige Kühlmittelversorgung zu den verschiedenen Kühlmittelaustritten 7 gewährleistet.

## Patentansprüche

1. Fräswerkzeug (100; 200; 300) mit:
einem Trägerkörper (1), der sich entlang einer Längsachse (L) erstreckt und eine Mehrzahl von über den Umfang des Trägerkörpers (1) verteilt angeordneten, sich schraubenförmig erstreckenden Spannuten (21) und eine Mehrzahl von jeweils entlang den Spannuten (21) ausgebildeten Sitzen (23, 23a) aufweist, an denen Schneideinsätze (4, 4a) angeordnet sind, die jeweils mit einer Hauptschneide (41) radial von dem Trägerkörper (1) vorstehen,
wobei sich die Spannuten (21) jeweils unter einem negativen Schraubenwinkel (α) erstrecken,
wobei sich die Hauptschneiden (41) jeweils unter einem positiven axialen Spanwinkel (β) erstrecken,
**dadurch gekennzeichnet, dass**
zumindest ein Schneidenteil (2) des Fräswerkzeugs (100), an dem die Spannuten (21) und die Sitze (23, 23a) ausgebildet sind, additiv gefertigt ist,
dass in dem Trägerköper (1) eine interne Kühlmittelzuführung zum Zuführen von Kühlmittel zu den Spannuten (21) ausgebildet ist,
die eine Mehrzahl von Kühlmittelkanälen (7a) mit in Richtung der Sitze (23, 23a) verlaufenden Kühlmittelaustritten (7) aufweist,
dass zumindest ein Teil der Kühlmittelkanäle (7a) einen in einer vorgegebenen Kühlmittelströmungsrichtung gekrümmten Verlauf hat,
so dass das Kühlmittel im Betrieb umgelenkt wird,
dass die Kühlmittelkanäle (7a) relativ geringen Durchmessers sind und sich dabei ausgehend von Kühlmittelverteilerkavitäten (7b) erstrecken, die einen größeren Durchmesser aufweisen,
und dass sich an die Hauptschneiden (41) unter einem positiven radialen Spanwinkel (γ) verlaufende Spanflächen (43) anschließen.

2. Fräswerkzeug nach Anspruch 1, wobei in den Spannuten (21) jeweils mehrere Kühlmittelaustritte (7) ausgebildet sind.

3. Fräswerkzeug nach einem der vorangehenden Ansprüche, wobei die Sitze (23, 23a) entlang den Spannuten (21) jeweils derart angeordnet sind, dass die Flugkreise der Hauptschneiden (41) der daran befindlichen Schneideinsätze (4, 4a) in Axialrichtung überlappen.

4. Fräswerkzeug nach einem der vorangehenden Ansprüche, wobei der Trägerkörper (1) einen im Wesentlichen ringförmigen bzw. hohlzylindrischen Schneidenteil (2), an dessen Außenumfang die Spannuten (21) und Sitze (23, 23a) ausgebildet sind, und einen Befestigungsabschnitt (3) mit einer Befestigungsschnittstelle (31) zum Verbinden mit einer maschinenseitigen Werkzeugaufnahme aufweist.

5. Fräswerkzeug nach Anspruch 4, wobei der Befestigungsabschnitt (3) materialabtragend gefertigt ist und der Schneidenteil (2) und der Befestigungsabschnitt (3) stoffschlüssig miteinander verbunden sind.

6. Fräswerkzeug nach einem der vorangehenden Ansprüche, wobei die Schneideinsätze (4, 4a) stoffschlüssig an den Sitzen (23, 23a) befestigt sind.

7. Fräswerkzeug nach einem der vorangehenden Ansprüche, wobei die Sitze (23, 23a) zumindest drei ebene Anlageflächen (30) zur Abstützung von drei verschiedenen Seiten der Schneideinsätze (4, 4a) aufweisen.

8. Verfahren zum Herstellen eines Schneidenteils (2) eines Fräswerkzeugs, welcher Schneidenteil (2) sich entlang einer Längsachse (L) erstreckt und eine Mehrzahl von über den Umfang des Schneidenteils (2) verteilt angeordneten, sich schraubenförmig erstreckenden Spannuten (21) und eine Mehrzahl von jeweils entlang den Spannuten ausgebildeten Sitzen (23, 23a) für Schneideinsätze (4, 4a) aufweist,
wobei das Herstellen des Schneidenteils (2) in einem additiven Herstellungsverfahren durch sukzessives schichtweises Aufbauen des Schneidenteils (2) derart erfolgt, dass die Spannuten (21) unter einem negativen Schraubenwinkel (α) verlaufend aufgebaut werden und die Sitze (23, 23a) zur Aufnahme von Schneideinsätzen (4, 4a) derart ausgebildet werden, dass sich diese unter einem positiven axialen Spanwinkel (β) erstrecken und dass sich an die Hauptschneiden (41) unter einem positiven radialen Spanwinkel (γ) verlaufende Spanflächen (43) anschließen,
wobei bei dem additiven Herstellungsverfahren eine interne Kühlmittelzuführung zum Zuführen von Kühlmittel zu den Spannuten (21) ausgebildet wird, die eine Mehrzahl von Kühlmittelkanälen mit in Richtung der Sitze (23, 23a) verlaufenden Kühlmittelaustritten (7) hat,
wobei das Ausbilden der Kühlmittelkanäle (7a) derart erfolgt, dass diese zumindest bereichsweise einen gekrümmten Verlauf aufweisen, so dass das Kühlmittel im Betrieb umgelenkt wird,
wobei ferner Kühlmittelverteilerkavitäten (7b) ausgebildet werden, wobei die Kühlmittelkanäle (7a) mit relativ geringen Durchmessern ausgebildet werden und sich dabei ausgehend von den
Kühlmittelverteilerkavitäten (7b) erstrecken, die einen größeren Durchmesser aufweisen.

9. Verfahren nach Anspruch 8, wobei eine Mehrzahl von Sitzen (23a) an einer Stirnseite (20) des Schneidenteils (2) zur Aufnahme von Schneideinsätzen (4a) derart, dass sie axial von der Stirnseite (20) des Schneidenteils (2) hervorstehen, ausgebildet wird und der Schneidenteil (2) sukzessiv schichtweise von einer von der Stirnseite (20) abgewandten Schaftseite (25) zu der Stirnseite (20) hin aufgebaut wird.

10. Verfahren nach einem der Ansprüche 8 oder 9, wobei in den Spannuten (21) jeweils mehrere Kühlmittelaustritte (7) ausgebildet werden.

11. Verfahren nach einem der Ansprüche 8 bis 10, wobei die Sitze (23, 23a) mit jeweils zumindest drei ebenen Anlageflächen (30) zur Abstützung von drei verschieden Seiten der Schneideinsätze (4, 4a) ausgebildet werden.

12. Verfahren nach einem der Ansprüche 8 bis 11, wobei das Verfahren ferner den Schritt aufweist: stoffschlüssiges Verbinden des Schneidenteils (2) mit einem separat ausgebildeten Befestigungsabschnitt (3), der eine Befestigungsschnittstelle (31) zum Verbinden mit einer maschinenseitigen Werkzeugaufnahme aufweist.

## Claims

1. Milling tool (100; 200; 300) with:
a carrier body (1) which extends along a longitudinal axis (L) and has a plurality of helically extending chip flutes (21) arranged distributed over the circumference of the carrier body (1) and a plurality of seats (23, 23a) which are each formed along the chip flutes (21) and on which cutting inserts (4, 4a) are arranged, which each project radially from the carrier body (1) with a main cutting edge (41),
wherein the chip flutes (21) each extend at a negative screw angle (α),
wherein the main cutting edges (41) each extend at a positive axial rake angle (β),
**characterised in that**
at least one cutting part (2) of the milling tool (100), on which the chip flutes (21) and the seats (23, 23a) are formed, is additively manufactured,
that an internal coolant supply is formed in the carrier body (1) for supplying coolant to the chip flutes (21),
which has a plurality of coolant channels (7a) with coolant outlets (7) extending in the direction of the seats (23, 23a),
**in that** at least some of the coolant channels (7a) have a course which is curved in a predetermined coolant flow direction, so that the coolant is deflected during operation,
that the coolant channels (7a) are relatively small in diameter and extend from coolant distribution cavities (7b) which have a larger diameter,
and that the main cutting edges (41) are adjoined by rake faces (43) extending at a positive radial rake angle (γ).

2. Milling tool according to claim 1, wherein a plurality of coolant outlets (7) are formed in the chip flutes (21).

3. Milling tool according to one of the preceding claims, wherein the seats (23, 23a) are each arranged along the chip flutes (21) in such a way that the flight circles of the main cutting edges (41) of the cutting inserts (4, 4a) located thereon overlap in the axial direction.

4. Milling tool according to one of the preceding claims, wherein the carrier body (1) has a substantially annular or hollow-cylindrical cutting part (2), on the outer circumference of which the chip flutes (21) and seats (23, 23a) are formed, and a fastening section (3) with a fastening interface (31) for connection to a machine-side tool holder.

5. Milling tool according to claim 4, wherein the fastening section (3) is manufactured in a material-removing manner and the cutting part (2) and the fastening section (3) are connected to one another in a material-locking manner.

6. Milling tool according to one of the preceding claims, wherein the cutting inserts (4, 4a) are attached to the seats (23, 23a) in a material-locking manner.

7. Milling tool according to one of the preceding claims, wherein the seats (23, 23a) have at least three flat contact surfaces (30) for supporting three different sides of the cutting inserts (4, 4a).

8. Method for manufacturing a cutting part (2) of a milling tool, which cutting part (2) extends along a longitudinal axis (L) and has a plurality of helically extending chip flutes (21) arranged distributed over the circumference of the cutting part (2) and a plurality of seats (23, 23a) for cutting inserts (4, 4a), each formed along the chip flutes,
wherein the cutting part (2) is manufactured in an additive manufacturing process by successive layer-by-layer construction of the cutting part (2) in such a way that the chip flutes (21) are constructed extending at a negative screw angle (α) and the seats (23, 23a) for receiving cutting inserts (4, 4a) are formed in such a way that these extend at a positive axial rake angle (β) and that rake faces (43) extending at a positive radial rake angle (γ) adjoin the main cutting edges (41),
wherein in the additive manufacturing process an internal coolant supply for supplying coolant to the chip flutes (21) is formed, which has a plurality of coolant channels with coolant outlets (7) extending in the direction of the seats (23, 23a),
wherein the coolant channels (7a) are formed in such a way that they have a curved course, at least section-wise, so that the coolant is deflected during operation,
wherein coolant distribution cavities (7b) are also formed, wherein the coolant channels (7a) are formed with relatively small diameters and extend from the coolant distribution cavities (7b), which have a larger diameter.

9. Method according to claim 8, wherein a plurality of seats (23a) is formed on an end face (20) of the cutting part (2) for receiving cutting inserts (4a) such that they project axially from the end face (20) of the cutting part (2), and the cutting part (2) is successively built up in layers from a shank side (25) facing away from the end face (20) towards the end face (20).

10. Method according to one of claims 8 or 9, wherein a plurality of coolant outlets (7) are formed in each of the chip flutes (21).

11. Method according to one of claims 8 to 10, wherein the seats (23, 23a) are each formed with at least three flat contact surfaces (30) for supporting three different sides of the cutting inserts (4, 4a).

12. Method according to one of claims 8 to 11, wherein the method further comprises the step of: materially connecting the cutting part (2) to a separately formed fastening section (3), which has a fastening interface (31) for connecting to a tool holder on the machine side.

## Revendications

1. Outil de fraisage (100 ; 200 ; 300) comprenant :
un corps de support (1) qui s'étend le long d'un axe longitudinal (L) et qui présente une pluralité de rainures à copeaux (21) réparties sur la périphérie du corps de support (1) et s'étendant de manière hélicoïdale, et une pluralité de sièges (23, 23a) formés chacun le long des rainures à copeaux (21), sur lesquels sont agencés des inserts de coupe (4, 4a), chacun d'eux faisant saillie radialement du corps de support (1) par une arête de coupe principale (41),
les rainures à copeaux (21) s'étendant chacune selon un angle hélicoïdal négatif (α),
les arêtes de coupe principales (41) s'étendant chacune selon un angle de coupe axial positif (β),
**caractérisé en ce que**
au moins une partie de coupe (2) de l'outil de fraisage (100), sur laquelle sont formées les rainures à copeaux (21) et les sièges (23, 23a), est fabriquée par addition, **en ce que** dans le corps de support (1) est formée une alimentation interne en agent de refroidissement pour l'amenée d'agent de refroidissement aux rainures à copeaux (21),
qui présente une pluralité de canaux (7a) à fluide de refroidissement avec des sorties (7) d'agent de refroidissement s'étendant en direction des sièges (23, 23a),
**en ce qu'**au moins une partie des canaux (7a) à fluide de refroidissement présentent un parcours incurvé dans une direction prédéterminée d'écoulement d'agent de refroidissement, de sorte que, pendant le fonctionnement, le fluide de refroidissement soit dévié,
**en ce que** les canaux (7a) à fluide de refroidissement ont un diamètre relativement petit et s'étendent à partir de cavités (7b) de distribution d'agent de refroidissement qui présentent un diamètre plus grand,
et **en ce que** des surfaces à copeaux (43), s'étendant selon un angle de coupe radial positif (γ), se raccordent aux arêtes de coupe principales (41).

2. Outil de fraisage selon la revendication 1, dans lequel plusieurs sorties (7) de liquide de refroidissement sont formées dans chacune des rainures à copeaux (21).

3. Outil de fraisage selon l'une des revendications précédentes, dans lequel les sièges (23, 23a) sont chacun agencés le long des rainures à copeaux (21) de telle sorte que les cercles de circulation des arêtes de coupe principales (41) des inserts de coupe (4, 4a) qui s'y trouvent se chevauchent dans la direction axiale.

4. Outil de fraisage selon l'une des revendications précédentes, dans lequel le corps de support (1) présente une partie de coupe (2) sensiblement annulaire ou cylindrique creuse, sur la périphérie extérieure de laquelle sont formées les rainures à copeaux (21) et sièges (23, 23a), et une section de fixation (3) avec une interface de fixation (31) pour la liaison avec un siège d'outil côté machine.

5. Outil de fraisage selon la revendication 4, dans lequel la section de fixation (3) est fabriquée par enlèvement de matière et la partie de coupe (2) et la section de fixation (3) sont reliées entre elles par liaison de matière.

6. Outil de fraisage selon l'une des revendications précédentes, dans lequel les inserts de coupe (4, 4a) sont fixés par liaison de matière aux sièges (23, 23a).

7. Outil de fraisage selon l'une des revendications précédentes, dans lequel les sièges (23, 23a) présentent au moins trois surfaces d'appui planes (30) pour l'appui de trois côtés différents des inserts de coupe (4, 4a).

8. Procédé de fabrication d'une partie de coupe (2) d'un outil de fraisage, laquelle partie de coupe (2) s'étend le long d'un axe longitudinal (L) et présente une pluralité de rainures à copeaux (21) réparties sur la périphérie de la partie de coupe (2) et s'étendant de manière hélicoïdale, et une pluralité de sièges (23, 23a) pour des inserts de coupe (4, 4a) formés respectivement le long des rainures à copeaux,
la fabrication de la partie de coupe (2) s'effectuant au moyen d'un procédé de fabrication additive par construction successive couche par couche de la partie de coupe (2) de telle sorte que les rainures à copeaux (21) soient construites en s'étendant selon un angle d'hélicoïde négatif (α) et que les sièges (23, 23a), pour recevoir des inserts de coupe (4, 4a), soient réalisés de telle sorte que ceux-ci s'étendent selon un angle de coupe axial positif (β) et que des surfaces à copeaux (43), s'étendant selon un angle de coupe radial positif (γ), se raccordent aux arêtes de coupe principales (41) ; lors du procédé de fabrication additive, une amenée interne d'agent de refroidissement est formée pour amener de l'agent de refroidissement aux rainures à copeaux (21), laquelle a une pluralité de canaux d'agent de refroidissement avec des sorties (7) d'agent de refroidissement s'étendant en direction des sièges (23, 23a),
la formation des canaux (7a) d'agent de refroidissement s'effectuant de telle sorte que ceux-ci présentent au moins par endroits un parcours incurvé, de sorte que, pendant le fonctionnement, l'agent de refroidissement soit dévié,
des cavités (7b) de distribution d'agent de refroidissement étant en outre formées, les canaux (7a) d'agent de refroidissement étant formés avec des diamètres relativement petits et s'étendant à partir des cavités (7b) de distribution d'agent de refroidissement, qui présentent un diamètre plus grand.

9. Procédé selon la revendication 8, dans lequel une pluralité de sièges (23a) sont formés sur une face frontale (20) de la partie de coupe (2) pour recevoir des inserts de coupe (4a) de manière à faire saillie axialement de la face frontale (20) de la partie de coupe (2), et la partie de coupe (2) est construite successivement couche par couche depuis une face de tige (25) opposée à la face frontale (20) vers la face frontale (20).

10. Procédé selon l'une des revendications 8 ou 9, dans lequel plusieurs sorties d'agent de refroidissement (7) sont formée s dans chacune des rainures à copeaux (21).

11. Procédé selon l'une des revendications 8 à 10, dans lequel les sièges (23, 23a) sont formés chacun avec au moins trois surfaces de contact planes (30) pour supporter trois côtés différents des inserts de coupe (4, 4a).

12. Procédé selon l'une des revendications 8 à 11, le procédé comprenant en outre l'étape consistant à : relier par liaison de matière la partie de coupe (2) à une partie de fixation (3) formée séparément et comprenant une interface de fixation (31) destinée à être reliée à un porte-outil côté machine.
